# FASCICULE DE BREVET EUROPEEN

(11) **EP 2 702 280 B1**
(45) Date de publication et mention de la délivrance du brevet: **18.05.2016**
(21) Numéro de dépôt: 12722546.4
(22) Date de dépôt: 27.04.2012
(51) Int. Cl.: F16B 37/06

(54) **BOULON A SERTIR EN AVEUGLE**
BLINDNIETBOLZEN
BLIND RIVET BOLT

(30) Priorité: 29.04.2011 FR 1153662
(43) Date de publication de la demande: 05.03.2014
(73) Titulaire: G Force, 55200 Commercy (FR)
(72) Inventeur: GROJEAN, Alex, F-55200 Commercy (FR); GROJEAN, Maxime, F-55200 Commercy (FR); MASSEBEUF, Eric, F-74600 Quintal (FR)
(74) Mandataire: Cabinet Poncet
(86) Numéro de dépôt international: PCT/IB2012/052138
(87) Numéro de publication internationale: WO 2012/147068

(56) Documents cités:
- DE-A1- 10 253 888
- GB-A- 1 269 924

## Description

### DOMAINE TECHNIQUE DE L'INVENTION

La présente invention concerne le domaine de l'assemblage de pièces, notamment pour les situations où il n'existe un accès que d'un seul côté de l'assemblage.

Plus particulièrement, elle porte sur un boulon à sertir en aveugle, permettant d'assembler deux ou plusieurs pièces en n'ayant un accès que d'un seul côté de l'assemblage, ou dont l'accès au deuxième côté est difficile.

Dans le domaine de l'assemblage d'accessoires ou de tôles sur un support, il est fréquent de devoir opérer en aveugle, l'accès n'étant possible que d'un seul côté de l'assemblage. Ce peut être le cas par exemple pour fixer des tôles contre une paroi, ou sur un châssis, où il est très difficile d'opérer des deux côtés de la paroi, ou du moins cela nécessiterait l'intervention d'une deuxième personne.

Il existe des solutions connues de clouage, de rivetage ou de vissage dans la masse, qui permettent un assemblage avec accès d'un seul côté. Néanmoins, selon les matériaux, ces modes d'assemblage peuvent ne pas être suffisamment solides, et il peut être nécessaire ou souhaitable de pouvoir disposer de l'autre côté de la paroi à fixer un écrou ou insert d'une matière choisie.

Dans ce but, il est connu de disposer un tel écrou par sertissage. Cela consiste à utiliser un insert comprenant une tête et une partie taraudée, à introduire la partie taraudée par le côté accessible, puis, par traction entre la partie taraudée et la tête, à déformer une partie intermédiaire, le chambrage, de sorte que la partie taraudée et la tête pincent la paroi. L'insert se trouve ainsi attaché à la paroi, et peut coopérer avec une vis pour la fixation d'une pièce à la paroi.

Néanmoins plusieurs inconvénients ont été observés sur ce type d'assemblage.

En particulier, le serrage entre la tête de l'insert et l'écrou peut ne pas être suffisant pour empêcher l'insert de tourner sous l'effet du vissage lors de l'introduction d'une vis dans l'écrou pour l'assemblage d'une pièce sur la paroi. L'assemblage devient alors très difficile, car aucun moyen n'est prévu pour empêcher la rotation de l'écrou.

Le document FR 2 515 283 divulgue un écrou à sertir comportant des cannelures sous sa tête, qui s'impriment dans la paroi pendant le sertissage, empêchant ainsi sa rotation.

Ensuite, l'outil qui exerce la traction entre l'écrou et la tête de l'insert peut endommager le taraudage de l'écrou, et son utilisation avec une vis d'assemblage peut s'avérer difficile.

Le document FR 2 642 802 décrit un écrou à sertir avec une tige prévue pour exercer l'effort de sertissage sans entrer en contact avec le taraudage de l'écrou. Ainsi ce taraudage n'est pas endommagé par l'effort de sertissage.

Néanmoins ces solutions de l'état de la technique présentent d'importants inconvénients. En effet, il se passe du temps entre le moment où l'écrou est mis en place, et celui où une vis y est introduite, et pendant ce temps des saletés peuvent s'introduire dans l'écrou, et perturber ensuite le vissage. Ensuite, il faut organiser deux opérations distinctes, l'une pour sertir l'écrou, l'autre pour introduire la vis, ce qui augmente le coût de montage. De plus, il n'est pas toujours facile d'aligner une vis dans l'axe du taraudage d'un insert, ce qui augmente encore la difficulté et les risques de montage. Un engagement de travers d'une vis dans un insert taraudé peut engendrer la destruction de ces composants d'assemblage. Par ailleurs, l'opérateur chargé d'introduire la vis n'est très souvent pas celui qui a mis en place l'insert, ce qui dilue les responsabilités, et nuit à l'efficacité d'une production. Enfin, quand le taraudage n'est pas utilisé pour la mise en place de l'insert, on perd une occasion de contrôler la présence du taraudage ; il peut en effet arriver que des inserts sortent d'une chaîne de fabrication sans taraudage, le taraud ayant cassé, et ceci n'ayant été pris en compte qu'après la sortie de plusieurs inserts. La paroi est alors équipée d'un ou plusieurs inserts mal ou non taraudés, et nécessite une réparation ou un rejet.

Le document EP 1 961 976 décrit un boulon à sertir pour lequel le sertissage de l'insert et le vissage de la vis se font en une seule opération, la tête d'insert comportant une partie déformable, qui en se déformant permet à la tête de vis d'appuyer une rondelle sur l'accessoire à fixer. Néanmoins cette solution permet seulement de compenser de très petites variations d'épaisseur, et oblige à adapter précisément une dimension de boulon à chaque type d'assemblage. De plus, le démontage ultérieur d'un tel assemblage est très difficile.

### EXPOSE DE L'INVENTION

La présente invention a pour but de pallier au moins en partie ces inconvénients.

A cet effet, l'invention propose un boulon comprenant une vis et un insert insérable dans l'orifice d'une paroi, ledit insert comportant une tête d'insert et un fût comprenant un chambrage, ladite tête d'insert et ledit chambrage étant configurés pour, après déformation du chambrage, assurer le sertissage dudit insert sur ladite paroi.

Le dispositif est particulier en ce que ladite vis comporte un anneau de rupture, conçu pour, en s'appuyant sur ladite tête d'insert, directement ou indirectement, immobiliser ladite vis par rapport à ladite tête d'insert en vue d'opérer par rotation de la vis la déformation du chambrage et d'obtenir ledit sertissage, et conçu pour, une fois le sertissage effectué, provoquer une rupture de sorte à libérer la vis par rapport à ladite tête d'insert, permettant ainsi le serrage d'un accessoire sur la paroi.

Cette rupture peut être une rupture mécanique dans l'anneau de rupture ou dans des moyens d'entretoise.

Grâce à ces dispositions, la vis peut être introduite dans l'insert avant le sertissage, ce qui permet d'une part d'éviter les risques d'introduction de saletés dans l'insert entre le sertissage et le vissage, et d'autre part permet un sertissage et un vissage en une seule opération. Par ailleurs, une même dimension de vis permet de réaliser des assemblages d'accessoires d'épaisseurs variées, ou aussi de plusieurs accessoires superposés, et le démontage de l'accessoire peut se faire par simple dévissage.

Selon d'autres caractéristiques :
- ladite rupture peut s'opérer dans l'anneau de rupture,
- l'insert peut comprendre un moyen de blocage en rotation dudit insert ; cela permet d'éviter que l'insert tourne quand on veut serrer la vis ; on garantit ainsi que le vissage est toujours possible, quand on applique un couple sur la vis ; ce moyen de blocage peut être obtenu par un frottement résistif, ou alors par une forme quelconque à section transversale non circulaire ; ce peut être une ou plusieurs protubérances ou des cannelures disposées à l'extérieur de l'insert, ou une forme ovale, ou polygonale,
- ledit moyen de blocage en rotation peut être une forme externe hexagonale ; cela représente une forme aisée à fabriquer, et peut concerner le fût de l'insert, bloqué ainsi par rapport à la paroi, ou peut concerner la tête d'insert, qui peut alors être bloquée par rapport à la paroi, ou par rapport à l'accessoire,
- ledit boulon peut comporter en outre des moyens d'entretoise disposés entre ledit anneau de rupture et la tête d'insert et comprenant une rondelle ; une telle rondelle permet de concevoir l'anneau de rupture plus petit, son diamètre extérieur devant être supérieur au diamètre intérieur de la rondelle, alors que sans une telle rondelle, en général son diamètre extérieur doit être suffisant pour reposer sur la tête d'insert ; une telle rondelle peut aussi être conçue avec une partie sécable, l'anneau de rupture provoquant alors la rupture de cette partie sécable et restant lui-même solidaire du corps de la vis,
- ledit boulon peut comporter en outre des moyens d'entretoise disposés entre ledit anneau de rupture et la tête d'insert et comprenant un élément tubulaire muni d'un épanouissement radial apte à venir en appui contre la tête d'insert ; dans ce cas, on peut prévoir une rupture se produisant dans l'anneau de rupture et/ou une rupture séparant une partie au moins d'épanouissement radial de l'élément tubulaire ; on peut également ne prévoir qu'une rupture séparant une partie au moins d'épanouissement radial de l'élément tubulaire, notamment lorsque l'anneau de rupture est constitué par la tête de vis elle-même,
- la vis peut comporter une tête de vis munie d'une embase destinée à s'appuyer sur l'accessoire, directement ou par l'intermédiaire d'une rondelle, assurant ainsi une meilleure application des efforts d'appui de la tête de vis sur l'accessoire,
- une cavité peut être disposée sous ladite embase, en vue d'y loger au moins partiellement ledit anneau de rupture et/ou les moyens d'entretoise,
- ladite tête d'insert, ledit anneau de rupture et le cas échéant lesdits moyens d'entretoise peuvent être configurés de sorte qu'en position assemblée la tête de vis s'appuie sur l'insert par l'intermédiaire de l'anneau de rupture et/ou des moyens d'entretoise, sans s'appuyer sur ledit accessoire, de sorte à constituer une fixation permettant audit accessoire d'être mobile en rotation et/ou en translation par rapport à la paroi,
- ladite vis peut comporter une partie non filetée munie d'un élargissement, conçu apte à permettre de figer l'anneau de rupture par coulissement en force vers ledit élargissement lors de la phase de vissage qui suit sa rupture, ce qui permet d'éviter toute nuisance, notamment sonore, qui viendrait de la mobilité de cet anneau par rapport à la vis, en particulier quand on manipule un grand nombre de tels boulons. Cet élargissement peut se traduire de plusieurs manières : augmentation de diamètre, cannelures, ou autre,
- ledit insert peut présenter un affaiblissement du chambrage de sorte à faciliter sa déformation lors du sertissage, cet affaiblissement étant de préférence matérialisé par des évidements, en particulier trois évidements ; ces évidements peuvent être situés répartis sur la circonférence du chambrage, et peuvent être borgnes ou débouchants,
- l'insert peut contenir un lubrifiant, de préférence de la graisse ; ce lubrifiant facilite le vissage en réduisant les frottements et protège ensuite le boulon contre la corrosion, notamment dans la zone où se produit la rupture qui peut affecter l'état de surface et affecter la résistance à la corrosion,
- ladite vis peut comporter une partie non filetée, comprise entre la tête de vis et la partie filetée, qui ne coopère pas avec la partie taraudée de l'insert, de sorte à conférer une élasticité nécessaire à la mise sous tension de la vis audit boulon en situation de serrage, même lorsque les épaisseurs des accessoires et parois sont très faibles.

La présente invention concerne également une méthode de fixation d'un accessoire sur une paroi par le moyen d'un boulon selon l'invention, ledit accessoire comportant un orifice d'accessoire conçu pour laisser passer la tête d'insert, et ladite paroi comportant un orifice de paroi conçu pour laisser passer le fût de l'insert. Cette méthode est particulière en ce qu'elle comporte les étapes suivantes :
a) disposition de l'accessoire sur la paroi de sorte à aligner les orifices d'accessoire et de paroi,
b) introduction du boulon dans les orifices ainsi alignés, dans le sens accessoire vers paroi, jusqu'à application de la tête d'insert sur la paroi,
c) mise en rotation de la vis, un filetage de la vis coopérant avec un taraudage de l'insert, l'anneau de rupture s'appuyant sur la tête d'insert, le cas échéant par l'intermédiaire des moyens d'entretoise, opérant ainsi une déformation du chambrage sous la paroi et réalisant ainsi le sertissage de l'insert sur la paroi,
d) augmentation du couple jusqu'à obtenir la rupture libérant la vis par rapport à la tête d'insert,
e) poursuite de la rotation de la vis jusqu'à obtenir le serrage de l'accessoire sur la paroi.

### DESCRIPTION SOMMAIRE DES DESSINS

La présente invention sera mieux comprise à la lecture de la description détaillée qui suit faite en référence aux figures annexées dans lesquelles :
- la figure 1 est une vue en perspective et en coupe partielle d'un assemblage avec un boulon selon un premier mode de réalisation de l'invention,
- la figure 2 est une vue en perspective illustrant schématiquement un accessoire,
- la figure 3 est une vue en perspective illustrant schématiquement une paroi,
- la figure 4 est une vue en coupe du boulon de la figure 1,
- la figure 5 est une vue de côté de la vis du boulon de la figure 4,
- la figure 6 est une vue en coupe d'un boulon selon un deuxième mode de réalisation de l'invention,
- la figure 7 est une vue de côté de la vis du boulon de la figure 6,
- les figures 8 à 11 sont des vues en coupe partielle illustrant l'utilisation d'un boulon selon le deuxième mode de réalisation de l'invention pour l'assemblage d'un accessoire sur une paroi,
- les figures 12 et 13 sont des vues en coupe de deux variantes d'assemblages avec un boulon selon le deuxième mode de réalisation selon l'invention,
- les figures 14 à 16 sont des vues en coupe d'une variante du deuxième mode de réalisation de l'invention,
- les figures 17 à 19 sont des vues en coupe d'un boulon selon un troisième mode de réalisation de l'invention.

### DESCRIPTION DES MODES DE REALISATION PREFERES

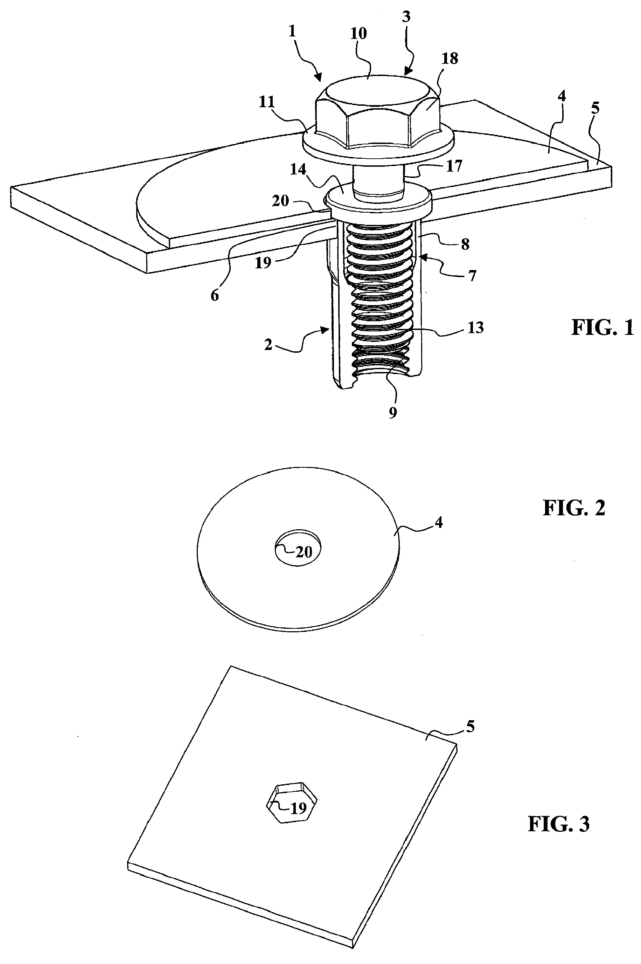

Les figures 1, 4 et 5 illustrent un premier mode de réalisation de l'invention dans lequel un boulon 1 est constitué d'un insert 2 et d'une vis 3.

Ce boulon 1 permet de fixer un accessoire 4 (figure 2) sur une paroi 5 (figure 3) dans une situation où il n'est possible d'accéder que d'un seul côté de la paroi 5.

L'insert 2 comporte une tête d'insert 6 et un fût 7 comprenant un chambrage 8 et une partie taraudée 9 à filetage interne.

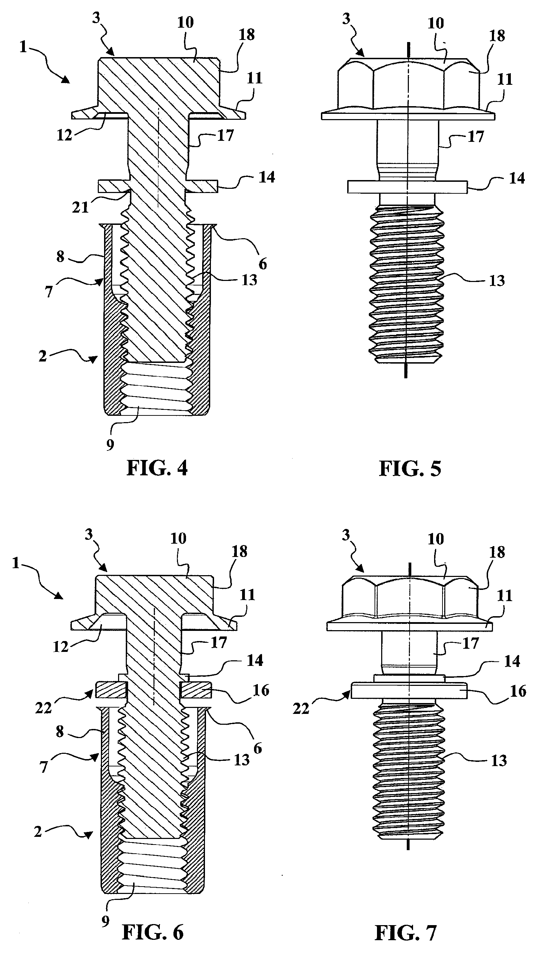

La vis 3 comporte une tête de vis 10, comprenant une empreinte 18, une embase 11 avec une cavité 12 (figure 4), une partie filetée 13 extérieurement, et un anneau de rupture 14.

La partie filetée 13 de la vis 3 permet le vissage de la vis 3 dans la partie taraudée 9 de l'insert 2 du boulon 1.

La tête d'insert 6 a pour fonction première d'assurer la tenue au déboutonnage lorsque la partie vis 3 n'assure plus un plaquage de l'accessoire 4 sur la paroi 5, et lorsqu'un effort tend à pousser l'insert 2 vers la partie inaccessible de la paroi 5.

Lors de la mise en oeuvre, la tête d'insert 6 a pour fonction de positionner le boulon 1 en translation. La tête d'insert 6 vient prendre appui sur la face accessible de la paroi 5, ce qui indique que le vissage peut commencer. La tête d'insert 6 doit être suffisamment peu encombrante en diamètre et hauteur pour autoriser un bon appui de la tête de vis 10 sur l'accessoire 4. Dans certains cas où l'épaisseur de l'accessoire est importante, il peut être intéressant d'augmenter la hauteur de la tête d'insert dans les limites mentionnées ci-dessus, pour offrir une fonction de guidage au moment du renouvellement de l'assemblage de l'accessoire et/ou renforcer le déboutonnage et/ou renforcer la tenue au cisaillement. La tête d'insert est également dimensionnée suffisamment solide pour supporter l'effort de sertissage transmis par l'anneau de rupture 14, ainsi que l'effort de rupture dans ledit anneau de rupture 14 qui s'appuie sur la tête d'insert 6.

Le fût 7 peut avoir une forme extérieure hexagonale qui permet de maintenir angulairement l'insert 2 dans l'orifice de paroi, de forme hexagonale. Ce maintien angulaire, anti rotation, matérialisé par l'emmanchement de ces deux formes hexagonales complémentaires l'une dans l'autre permet à l'insert 2 de contrer les efforts de couple qui lui sont transmis par la vis 3 lors des étapes de sertissage, de serrage et de desserrage. Bien entendu, d'autres formes à section transversale non circulaire sont possibles tout en restant dans le cadre de l'invention, comme une ou plusieurs protubérances ou des cannelures disposées à l'extérieur de l'insert 2, ou une forme ovale, ou polygonale, ces formes pouvant être appliquées au fût 7 et/ou à la tête d'insert 6.

Le fût 7 comporte une zone où sa paroi est mince, appelée chambrage 8, de forme intérieure hexagonale (comme la forme extérieure) ou circulaire. Toute forme d'affaiblissement de la paroi ou d'évidement, comme par exemple trois évidements débouchants ou non, répartis sur la circonférence, peut être envisagée pour permettre au chambrage 8 de se déformer plus facilement lors du sertissage, et d'être suffisamment solide ensuite pour tenir les efforts appliqués sur l'insert 2. L'épaisseur et la forme intérieure du chambrage 8 sont calibrées pour se déformer sous la contrainte transmise par la tension axiale provenant du couple appliqué sur la tête de vis 10. La déformation du chambrage 8 permet de sertir l'insert 2 sur la paroi 5. Le chambrage 8 après déformation prend la forme d'un bourrelet 15 qui pince la paroi 5 entre ledit bourrelet 15 placé du côté non accessible de la paroi 5, et la tête d'insert 6 du côté accessible. Le bourrelet 15 de sertissage encaisse donc un grand nombre d'efforts ; le couple de torsion lors des étapes de sertissage, de serrage ou de desserrage, l'effort d'arrachement lors du sertissage et du serrage. Lors du dimensionnement du chambrage 8, il est donc impératif de prendre en compte ces paramètres.

Le fût 7 comporte aussi une partie taraudée 9 qui est dimensionnée pour recevoir le filetage de la vis 3, et résister aux efforts de couple transmis par la vis 3, ainsi que pour faire face aux efforts d'arrachement qui sont appliqués sur le taraudage de l'insert 2 lors du sertissage, du serrage de l'ensemble et de la sollicitation de l'assemblage.

L'extrémité du fût 7 peut être ouverte ou borgne selon les formes de réalisation. La forme borgne permet d'étancher l'assemblage.

La vis 3 est mieux visible sur les figures 4 et 5.

La tête de vis 10 comporte une empreinte 18 mâle ou femelle (hexagonale, 6 pans creux, ou 6 lobes par exemple) permettant la transmission du couple de l'outil de serrage (clé, visseuse, outils spéciaux) à la vis 3.

L'embase 11 matérialise l'appui sur l'accessoire 4, permettant de mettre l'assemblage sous tension. L'embase 11 est munie d'une cavité 12 sous la tête de vis 10. Cette cavité 12 a vocation à recevoir une partie ou l'intégralité de l'anneau de rupture 14 afin de garantir le plaquage de l'accessoire 4 sur la paroi 5. Cette cavité 12 peut également loger au moins en partie d'éventuels moyens d'entretoise qui seront décrits ultérieurement.

L'anneau de rupture 14 est dimensionné pour immobiliser la vis 3 en translation par rapport à la tête d'insert 6 lors de la transmission de l'effort nécessaire à la déformation du chambrage 8 donc à la formation du bourrelet 15 de sertissage de l'insert 2.

Dans un premier mode de réalisation illustré sur les figures 1, 4 et 5, l'anneau de rupture 14 est destiné à venir directement en appui contre la tête d'insert 6 et est également dimensionné pour rompre sous une charge supérieure à celle nécessaire pour le sertissage et inférieure à celle que peut accepter la vis 3 sans subir de déformation plastique nuisible à la fonction de vis d'assemblage. La rupture dans l'anneau de rupture 14 permet à la vis 3 d'entrer dans la phase de serrage de l'assemblage, jusque là interdite par la présence de l'anneau de rupture 14 qui empêchait le rapprochement entre la tête de vis 10 et la surface de l'accessoire 4. L'anneau de rupture 14 est caractérisé par trois dimensions, son épaisseur permettant une rupture calibrée à un effort donné, son diamètre pour garantir un appui suffisant sur le sommet de la tête d'insert 6, et sa distance par rapport à la face inférieure de la tête de vis 10, dont la variation permet de s'adapter à des épaisseurs très différentes d'accessoires 4 à fixer à la paroi 5.

L'anneau de rupture 14 peut aussi comporter une amorce de rupture 21 qui favorise la rupture. L'amorce de rupture se matérialise par un affaiblissement de l'épaisseur de l'anneau de rupture 14 à proximité du diamètre du corps de la vis 3, comme illustré sur la figure 4.

Dans ce premier mode de réalisation, lorsque l'anneau de rupture 14 est rompu et ne laisse subsister aucune saillie radiale en périphérie de la tige de vis 3, plus rien ne s'oppose à la pénétration par vissage de la vis 3 dans l'insert 2. Il en résulte qu'avec une même structure de boulon 1, on peut assembler des parois 5 et accessoires 4 présentant des épaisseurs pouvant varier dans une large plage d'épaisseurs. A titre d'exemple, avec un boulon 1 muni d'une vis 3 de type M6, il est possible de s'adapter à une épaisseur de 1 mm (paroi 5 de 0,5 mm et accessoire 4 de 0,5 mm) jusqu'à une épaisseur de 8 mm (paroi 5 de 3 mm et accessoire 4 de 5 mm).

Selon un deuxième mode de réalisation d'un boulon 1 selon l'invention, celui-ci comprend en outre des moyens d'entretoise 22 comprenant une rondelle 16 (figures 6 et 7).

Les moyens d'entretoise 22 sont destinés à être intercalés entre la tête d'insert 6 et l'anneau de rupture 14. L'anneau de rupture 14 est alors dimensionné pour immobiliser la vis 3 en translation dans l'insert 2 lors de la transmission de l'effort nécessaire à la déformation du chambrage 8 donc à la formation du bourrelet 15 de sertissage de l'insert 2 en tenant compte de la présence de la rondelle 16.

Dans une première variante du deuxième mode de réalisation, l'anneau de rupture 14 est également dimensionné pour rompre sous une charge supérieure à celle nécessaire pour le sertissage et inférieure à celle que peut accepter la vis 3 sans subir de déformation plastique nuisible à la fonction de vis d'assemblage. La rupture dans l'anneau de rupture 14 permet à la vis 3 d'entrer dans la phase de serrage de l'assemblage, jusque là interdite par la présence de l'anneau de rupture 14 qui empêchait le rapprochement entre la tête de vis 10 et la surface de l'accessoire 4. L'anneau de rupture 14 est caractérisé par trois dimensions, son épaisseur permettant une rupture calibrée à un effort donné, son diamètre pour garantir un appui suffisant sur la rondelle 16, et sa distance par rapport à la face inférieure de la tête de vis 10, dont la variation permet de s'adapter à différentes épaisseurs d'accessoires 4 à fixer à la paroi 5.

La rondelle 16 des moyens d'entretoise 22 permet de faire la liaison mécanique entre la tête d'insert 6 et l'anneau de rupture 14. Cette rondelle 16 se caractérise par son diamètre extérieur qui doit assurer l'appui sur la tête d'insert 6 de manière à transmettre l'effort de sertissage ; par son diamètre intérieur qui permet l'appui de l'anneau de rupture 14 en une zone la plus proche possible de la tige de la vis 3 ; par son épaisseur qui ne doit pas perturber l'opération d'assemblage ainsi que sa mise sous tension mécanique. Sa résistance à la rupture doit permettre une rupture dans l'anneau de rupture 14 qui se désolidarise alors totalement ou en partie de la vis 3.

La rondelle 16 permet de mieux localiser l'effort de rupture de l'anneau de rupture 14 proche de la tige de la vis 3 ; de plus elle permet, lors de la phase de sertissage, de réduire les efforts de frottement de l'anneau de rupture 14, par réduction du diamètre moyen d'application des efforts de frottement.

Cette première variante du deuxième mode de réalisation présente le même avantage que le premier mode de réalisation en termes d'adaptation à une large plage d'épaisseurs de paroi 5 et d'accessoire 4.

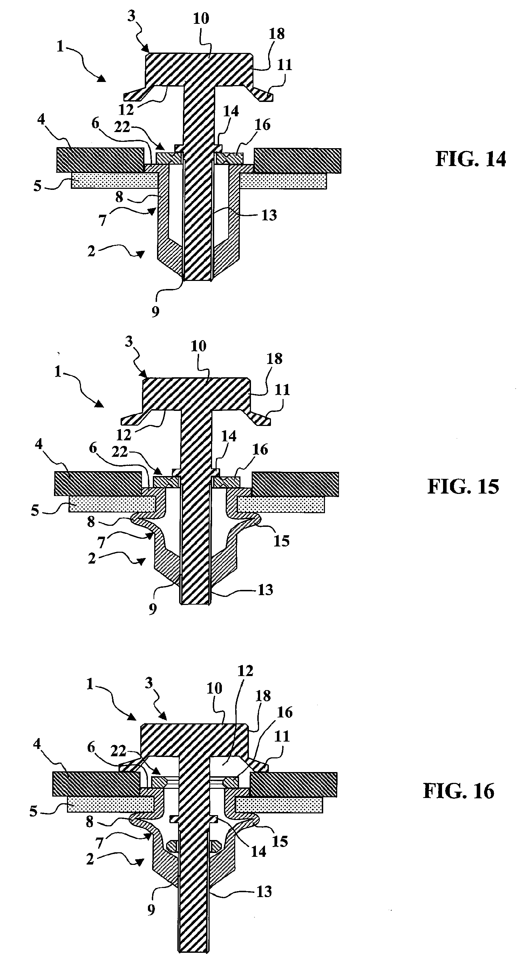

Dans une deuxième variante du deuxième mode de réalisation, illustrée sur les figures 14 à 16, l'anneau de rupture 14 s'appuie sur la tête d'insert 6 par l'intermédiaire de la rondelle 16 lors de la phase de sertissage, puis provoque une rupture dans la rondelle 16, ce qui libère la vis 3 par rapport à la tête d'insert 6, de sorte que le serrage de l'accessoire 4 peut s'effectuer par poursuite du serrage de la vis 3. L'anneau de rupture 14 reste alors solidaire du corps de la vis 3.

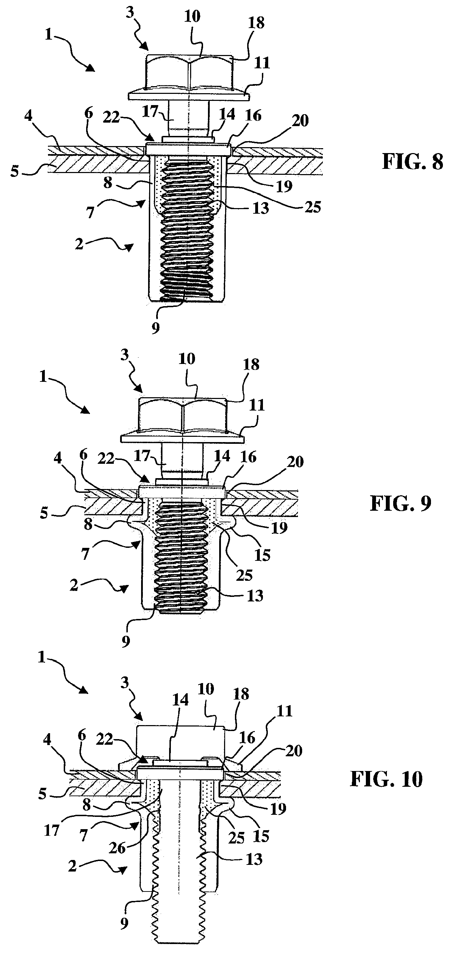

Les figures 8 à 11 illustrent quatre étapes de mise en oeuvre de la première variante du deuxième mode de réalisation de l'invention.

On souhaite fixer un ou plusieurs accessoires 4 sur une paroi 5, sans accès possible à l'arrière de la paroi 5, ou avec un accès possible mais difficile. A la place de la paroi 5, on peut aussi considérer tout support sur lequel on souhaite fixer un accessoire. Toute l'opération doit être réalisée du seul côté accessible de la paroi 5. Pour fixer de tels accessoires 4, il faut généralement plusieurs points de fixation. Pour la simplicité de l'exposé, nous décrivons ci-après la mise en place d'un accessoire 4 sur une paroi 5 à l'aide d'un seul boulon 1. Il sera facile à l'homme du métier d'organiser l'opération avec plusieurs accessoires 4, parois 5 et/ou boulons 1, ou avec une fixation sur d'autres supports qu'une paroi.

Il faut tout d'abord disposer d'un orifice dans la paroi 5, par exemple hexagonal comme illustré sur la figure 3. On peut obtenir cet orifice par découpe, poinçonnage ou tout autre moyen. On peut l'obtenir aussi directement par moulage. On obtient ce que nous appellerons l'orifice de paroi 19.

Il faut ensuite disposer d'un orifice dans l'accessoire 4. Cet orifice peut être obtenu par découpe, poinçonnage, ou moulage, mais également par une perceuse, l'orifice, que nous appellerons orifice d'accessoire 20 pouvant être circulaire (voir figure 2). Cet orifice d'accessoire 20 peut aussi prendre une forme hexagonale comme moyen de blocage de la tête d'insert en rotation. L'orifice d'accessoire 20 peut également prendre une forme allongée, par exemple en forme de trou oblong, pour faciliter le positionnement de l'accessoire 4 sur la paroi 5, ce qui peut sinon être compliqué du fait d'une pluralité de boulons 1. En effet, pour réduire les coûts de fabrication, il peut être intéressant de ne pas se contraindre par des tolérances trop serrées. La conséquence est que le positionnement des orifices les uns par rapport aux autres supporte également quelques écarts de tolérance, écarts qui peuvent être rattrapés grâce aux formes allongées des orifices d'accessoire 20.

L'accessoire 4 peut alors être positionné sur la paroi 5. Selon le poids et l'encombrement de l'accessoire 4, il peut être positionné par un opérateur qui le porte, ou par un gabarit, ou un montage d'assemblage. Ce qui est important, c'est d'aligner les orifices d'accessoire 20 et de paroi 19, pour permettre l'introduction du boulon 1.

Le boulon 1 est constitué de l'insert 2 et de la vis 3 pré-assemblée dans l'insert 2, vissée jusqu'à la position où l'anneau de rupture 14 vient en appui contre la tête d'insert 6 par l'intermédiaire de la rondelle 16 (voir figure 8). L'insert 2 contient un lubrifiant 25 tel que de la graisse. Le lubrifiant 25 peut être avantageusement appliqué dans l'insert 2 et/ou sur la vis 3 avant leur assemblage.

Bien entendu le boulon 1 peut aussi être pré-assemblé avec la vis 3 engagée moins profondément dans l'insert 2, l'anneau de rupture 14 n'appuyant pas sur la tête d'insert 6. Le contact entre l'anneau de rupture 14, par l'intermédiaire de moyens d'entretoise 22 à rondelle 16, et la tête d'insert 6 est alors obtenu en place suite aux premiers tours de vis opérés par la boulonneuse.

On peut aussi prévoir de livrer le boulon 1 non assemblé, les inserts 2 d'un côté, les vis 3 et le cas échéant les moyens d'entretoise 22 de l'autre.

Ce boulon 1 est alors amené sur le nez d'une boulonneuse spéciale ou de tout autre outil de pose adapté. Puis il est introduit dans les orifices en commençant par l'orifice d'accessoire 20, puis l'orifice de paroi 19. C'est le côté insert 2 du boulon 1 qui est introduit dans les orifices, la tête de vis 10 restant dans le nez de l'outil de pose pour réaliser ultérieurement le vissage. Le boulon 1 est considéré comme étant en position lorsque la face inférieure de la tête d'insert 6 est en contact plan avec la paroi 5 (voir figure 8). La tête d'insert 6 a alors traversé l'orifice d'accessoire 20, celui-ci ayant une dimension permettant à la tête d'insert 6 de le traverser.

On commence alors le vissage de la vis 3. Le couple est appliqué par la boulonneuse sur la tête de vis 10 grâce à l'empreinte 18. Le vissage entraîne la remontée de la zone taraudée de l'insert 2, produisant la formation d'un bourrelet 15 au niveau du fût 7 (voir figure 9). Le bourrelet 15 ainsi formé génère une surface qui prend appui sur la face arrière de la paroi 5. L'insert 2 est alors serti sur la paroi 5.

Le vissage est ensuite poursuivi, ce qui produit un effort de cisaillement dans l'anneau de rupture 14, jusqu'à y provoquer une rupture d'une partie au moins de celui-ci. La partie rompue d'anneau de rupture 14 glisse alors en translation le long de la partie non filetée de la vis 3 et ne s'oppose plus à la pénétration par vissage de la vis 3 dans l'insert 6.

Le vissage est alors poursuivi jusqu'à serrage de la tête de vis 10 contre l'accessoire 4 (voir figure 10). L'accessoire 4 et la paroi 5 sont alors plaqués et sous tension entre le bourrelet 15 et la tête de vis 10. Grâce à un élargissement de diamètre 17 de la partie non filetée de la vis 3 située entre l'anneau de rupture 14 et la face inférieure de la tête de vis 10, l'anneau de rupture 14, lors de la phase de vissage qui suit sa rupture, vient coulisser en force sur ce diamètre augmenté. Ainsi l'anneau de rupture 14 est figé sur la vis 3, évitant toute nuisance, en particulier sonore, pouvant résulter de vibrations lors de manipulations après un démontage.

En fin de vissage (figure 10), la zone 26 à laquelle était liée l'anneau de rupture 14 avant rupture est enrobée de graisse et est ainsi protégée de la corrosion.

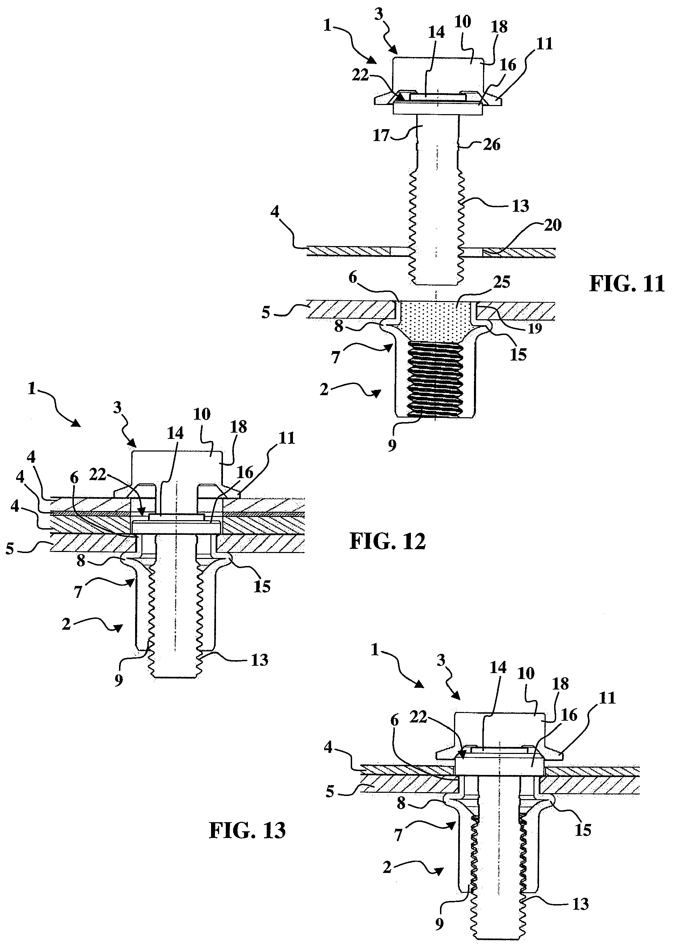

Pour démonter l'accessoire 4, il suffit de dévisser la vis 3, de la déposer, puis de déposer l'accessoire 4. L'insert 2 reste en place et solidaire de la paroi 5 (voir figure 11), et peut servir à nouveau pour matérialiser un autre assemblage, et recevoir une autre vis 3 ou à nouveau la même.

La figure 12 illustre la fixation de plusieurs accessoires 4 à une paroi 5.

La figure 13 illustre une variante du deuxième mode de réalisation, où la tête d'insert 6, l'anneau de rupture 14 et les moyens d'entretoise 22 à rondelle 16 sont dimensionnés pour que la tête de vis 10 s'appuie sur la tête d'insert 6 par l'intermédiaire des moyens d'entretoise 22 (rondelle 16 ici). Cette disposition permet de réaliser un montage de type pivot par exemple, dans lequel l'accessoire 4 est mobile en rotation par rapport à la paroi 5 car l'embase 11 de la tête de vis 10 n'appuie pas sur l'accessoire 4.

En alternative, un maintien de l'embase 11 à l'écart de l'accessoire 4 peut être garanti par un appui de la tête de vis 10 sur la tête d'insert 6 par l'intermédiaire de la rondelle 16 et de l'anneau de rupture 14, ou, lorsqu'il n'y a pas de moyens d'entretoise 22, par l'intermédiaire de l'anneau de rupture 14 seul.

Selon d'autres variantes, la tête d'insert 6, l'anneau de rupture 14 et le cas échéant les moyens d'entretoise 22 sont dimensionnés pour que la tête de vis 10 s'appuie sur l'accessoire 4, mais après une déformation faible et calibrée de l'accessoire 4, la tête de vis 10 s'appuie sur la tête d'insert 6, par l'intermédiaire de l'anneau de rupture 14 et/ou des moyens d'entretoise 22. Pour obtenir cette disposition, on peut adapter l'épaisseur des moyens d'entretoise 22, l'épaisseur de l'anneau de rupture 14, l'épaisseur de la tête d'insert 6 et/ou la géométrie de la tête de vis 10 (réduction ou suppression de la cavité 12 sous embase 11 par exemple). Cette disposition permet d'utiliser le boulon 1 selon l'invention avec une fonctionnalité de limiteur de compression, utile pour fixer certains accessoires 4 notamment en matière plastique, qui sinon se déformeraient sous la contrainte appliquée par la tête de vis 10, ce qui provoquerait un desserrage de l'assemblage.

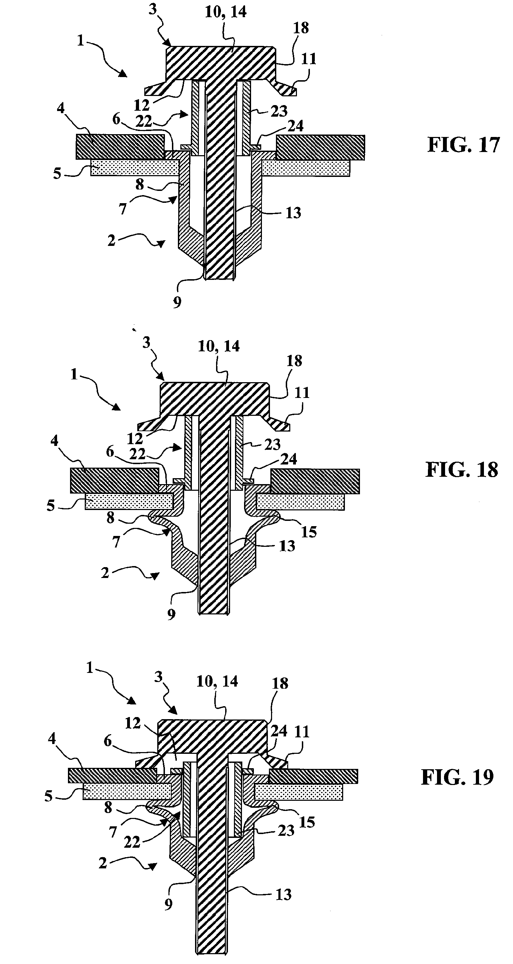

Sur les figures 17 à 19 est illustré un troisième mode de réalisation de l'invention. Comme dans le deuxième mode de réalisation de l'invention, celui-ci comporte des moyens d'entretoise 22. Dans ce troisième mode de réalisation, l'anneau de rupture 14 est constitué par la tête de vis 10. Les moyens d'entretoise 22 sont ainsi disposés entre la tête d'insert 6 et l'anneau de rupture 14 de la vis 3. L'anneau de rupture 14 vient ainsi en appui indirectement contre la tête d'insert 6 par l'intermédiaire des moyens d'entretoise 22.

Les moyens d'entretoise 22 comprennent un élément tubulaire 23 muni d'un épanouissement radial 24 apte à venir en appui contre la tête d'insert 6.

Lors de l'utilisation de ce troisième mode de réalisation selon l'invention, le boulon 1 est tout d'abord disposé comme illustré sur la figure 17. La vis 3 est alors mise en rotation par vissage à l'aide d'un outil. La vis 3 étant tenue immobile par rapport à la tête d'insert 6 et à la paroi 5 par les moyens d'entretoise 22 et l'anneau de rupture 14, le vissage provoque une déformation du chambrage 8 et une remontée de la zone taraudée de l'insert 2 jusqu'à sertissage de l'insert 2 sur la paroi 5 (figure 18).

Le vissage est ensuite poursuivi, ce qui produit un effort de cisaillement dans les moyens d'entretoise 22 jusqu'à y provoquer une rupture séparant l'élément tubulaire 23 et l'épanouissement radial 24. L'élément tubulaire 23 pénètre alors dans le chambrage 8 déformé de l'insert 2. La vis 3 n'est plus immobilisée par rapport à la paroi 5 et peut ainsi, par vissage dans l'insert 2 serti, venir serrer, au moyen de sa tête de vis 10, l'accessoire 4 sur la paroi 5.

Ce troisième mode de réalisation de l'invention permet d'utiliser une vis 3 standard et donc de coût réduit : l'anneau de rupture 14, au lieu d'être disposé sur un tronçon intermédiaire de sa tige comme dans les modes de réalisation illustrés sur les figures 1 et 4 à 16, est ici constitué par la tête de vis 10 elle-même.

Toutefois, il convient de préciser que la vis 3 telle qu'illustrée sur les figures 1 et 4 à 16, munie d'un anneau de rupture 14 disposé sur un tronçon intermédiaire de la tige de vis 3, peut être utilisée au lieu et à la place de la vis illustrée sur les figures 17 à 19. Dans ce cas, on pourra prévoir une rupture se produisant soit dans l'anneau de rupture 14 soit dans les moyens d'entretoise 22 (par séparation de l'élément tubulaire 23 et de l'épanouissement radial 24).

Dans tous les modes de réalisation de l'invention, l'anneau de rupture 14 se présente sous la forme d'un épaulement annulaire, fixe sur la vis 3 (monobloc ou rapporté), venant au contact de la tête d'insert 6 ou des moyens d'entretoise 22 selon une surface d'appui annulaire ou en forme de couronne circulaire.

Dans le cas où l'on utilise des moyens d'entretoise 22 destinés à se rompre, l'anneau de rupture 14 peut se présenter sous la forme d'un épaulement entre un tronçon proximal de vis 3 s'étendant depuis la tête de vis 10 et un tronçon distal fileté de diamètre extérieur inférieur à celui du tronçon proximal. On peut pour cela utiliser une vis épaulée standard.

L'insert 2, la vis 3 et les moyens d'entretoise 22 peuvent être fabriqués selon des techniques connues, comme la frappe à froid, le décolletage, ou le découpage emboutissage, ou alors l'injection notamment pour les pièces en matière plastique. Selon les modes de fabrication, il faut ensuite tarauder l'insert 2 et rouler le filetage 13 de la vis 3, puis si nécessaire effectuer un traitement thermique et/ou un traitement de surface. On peut aussi prévoir que la vis 3 effectue le taraudage 9 de l'insert 2 lors de son introduction dans l'insert 2.

L'insert 2 et/ou la vis 3 peuvent être en acier au carbone, acier inoxydable, titane, aluminium, polymère, ou tout autre matériau utilisé pour des accessoires ou composants de fixation.

La paroi 5 peut être une tôle ou corps creux en acier, inox, aluminium, cuivre, laiton, titane, fibre de carbone, plastique, bois, ou autre.

L'accessoire 4 peut être en acier, inox, aluminium, cuivre, laiton, titane, fibre de carbone, plastique, bois, ou autre. Ce peut être un accessoire tel qu'un panneau, ou une armoire électrique.

Les avantages de l'invention sont notamment les suivants :
a) permettre de boulonner deux éléments en aveugle avec un unique composant et en une unique opération d'assemblage, alors qu'il est nécessaire à ce jour de mettre en place dans un premier temps un écrou à sertir en aveugle ou tout autre dispositif taraudé pouvant être intégré en aveugle à la paroi 5, puis de terminer l'assemblage dans une seconde phase par le vissage d'une vis traversant l'accessoire 4 à assembler et trouvant sa place dans le taraudage de l'insert taraudé équipant la paroi 5. Un assemblage inversé est également possible en mettant en oeuvre un insert mâle à sertir en aveugle et un écrou. Il est à noter que dans de nombreux cas de l'état de la technique, le montage d'un insert taraudé et d'une vis s'effectue par deux acteurs différents, alors qu'avec un boulon 1 selon l'invention un tel montage s'effectue par un seul opérateur,
b) optimiser les temps d'assemblage par la réduction des opérations d'assemblage et ainsi générer des gains de productivité permettant de réduire les coûts liés aux fonctions d'assemblage. L'opération la plus onéreuse et la plus consommatrice de temps, liée à la mise en place d'un insert est supprimée,
c) faciliter les processus d'assemblage en éliminant la totalité des problèmes liés au vissage :
   - plus de problème de vissabilité lié au dépôt de peinture sur la partie filetée/taraudée de l'insert,
   - plus de problème de vissabilité lié au dépôt de gratons de soudure sur la partie fiiletéeltaraudée de l'insert, si ce dernier est un composant soudé ou un composant mis en oeuvre près d'une zone concernée par une opération de soudure réalisée ultérieurement à la mise en place de l'insert,
   - plus de problème de vissabilité lié à la détérioration de la zone taraudée ou filetée de l'insert, engendrée par le processus de mise en oeuvre : écrasement de l'insert sous la presse, déformation des filets lorsqu'ils sont utilisés pour la pose (exemple : insert à sertir en aveugle mâle ou femelle),
   - plus de problème de vissabilité lié à une mauvaise coaxialité du taraudage ou du filetage de l'insert mis en place,
   - plus de problème d'assemblage lié à l'absence du taraudage ou du filetage de la vis mise en place,
   - plus de problème d'assemblage lié à l'absence de taraudage ou de filetage de l'insert mis en place,
   - plus de problème d'assemblage lié à l'absence d'insert,
   - plus de problème de désolidarisation de l'insert de son support à l'engagement de la vis, lorsque ce dernier a été assemblé par l'un des moyens conventionnels d'assemblage (sertissage, soudage, etc.),
   - plus de problème de désolidarisation de l'insert de son support lors de la manutention de la paroi équipée de cet insert, lorsque ce dernier a été assemblé par l'un des moyens conventionnels d'assemblage (sertissage, soudage, etc.),
   - plus de problème de tension d'assemblage lié à une incompatibilité entre insert et vis,
   - plus de problème de tension d'assemblage lié à des différences de classe (permettant de classifier les accessoires de boulonnerie selon leurs résistances mécaniques) entre insert et vis,
   - plus de problème de tenue au couple de l'insert lors du vissage de la vis (plus de problème de grippage par exemple),
d) suppression des phases de contrôle qualité par l'élimination des causes motivant leur mise en oeuvre. Donc réduction des coûts et optimisation qualitative. En effet, les contrôles qualités ne sont que des solutions palliatives, il est plus pertinent d'en supprimer les causes,
e) plus de problème de développement de corrosion lié à une incompatibilité de traitement de surface entre insert et vis,
f) plus de problème de grippage lié à une incompatibilité de traitement de surface entre insert et vis,
g) plaquage parfait des deux parois à assembler, par l'absence de proéminence entre accessoire 4 et paroi 5, comme pour un écrou cage ou un écrou à sertir en aveugle,
h) force de plaquage importante et maîtrisée correspondant à la classe de la partie vis 3 (exemple : 8.8, 10.9, ...),
i) tenue au cisaillement élevée grâce à une force de plaquage importante limitant le glissement de l'accessoire 4 et de la paroi 5 l'un par rapport à l'autre,
j) tenue aux vibrations optimisée par l'effort de plaquage garanti par la tension de l'assemblage généré par le couple de serrage calibré et maîtrisé, et du fait de la distance minimale garantie entre la tête de vis 10 et le début du filetage 13, conférant à la vis 3 un minimum d'élasticité,
k) plus de problème de dévissage du composant complémentaire lié à une incompatibilité de coefficient de frottement,
l) plus de problème de dévissage du composant complémentaire lié à une mauvaise maîtrise des couples de serrage,
m) pose possible après réalisation des cordons de soudage entrant dans la gamme de fabrication des parois 5,
n) pose possible après réalisation du traitement de surface des parois 5 (peinture, galvanisation, cataphorèse, etc.),
o) limitation des investissements liés à la mise en oeuvre de l'insert 2 grâce à un simple pistolet de boulonnage ou une visseuse (quelques milliers d'Euro) contre plusieurs dizaines ou centaines pour certaines installations de soudage ou de sertissage,
p) pose sans consommation d'outillage comme les tirants de sertissage qui cassent à la fatigue après quelques milliers de pose,
q) pose sans consommation importante d'énergie comme pour le soudage (électricité, gaz, outillage, etc.).

Tous ces avantages sont décrits avec un insert 2 comme premier élément de fixation dans la paroi 5 ou le support, et une vis 3 comme élément de fixation complémentaire pour fixer l'accessoire 4. Ils sont bien entendu tout aussi réels avec tout autre premier élément de fixation fixé dans une paroi 5 ou un support ou élément de fixation complémentaire pour fixer l'accessoire 4.

### Nomenclature :

1. boulon
2. insert
3. vis
4. accessoire
5. paroi
6. tête d'insert
7. fût
8. chambrage
9. partie taraudée
10. tête de vis
11. embase
12. cavité
13. partie filetée
14. anneau de rupture
15. bourrelet de sertissage
16. rondelle
17. élargissement
18. empreinte
19. orifice de paroi
20. orifice d'accessoire
21. amorce de rupture
22. moyens d'entretoise
23. élément tubulaire
24. épanouissement radial
25. lubrifiant
26. zone.

## Revendications

1. Boulon (1), comprenant une vis (3) et un insert (2) insérable dans l'orifice d'une paroi (5), ledit insert (2) comportant une tête d'insert (6) et un fût (7) comprenant un chambrage (8), ladite tête d'insert (6) et ledit chambrage (8) étant configurés pour, après déformation du chambrage (8), assurer le sertissage dudit insert (2) sur ladite paroi (5), **caractérisé en ce que** ladite vis (3) comporte un anneau de rupture (14), conçu pour, en s'appuyant sur ladite tête d'insert (6), directement ou indirectement, immobiliser ladite vis (3) par rapport à ladite tête d'insert (6) en vue d'opérer par rotation de la vis la déformation du chambrage (8) et d'obtenir ledit sertissage, et conçu pour, une fois le sertissage effectué, provoquer une rupture de sorte à libérer la vis (3) par rapport à ladite tête d'insert (6), permettant ainsi le serrage d'un accessoire (4) sur la paroi (5).

2. Boulon (1) selon la revendication 1, dans lequel l'anneau de rupture (14) vient en appui directement contre la tête d'insert (6).

3. Boulon (1) selon la revendication 1, dans lequel l'anneau de rupture (14) vient en appui indirectement contre la tête d'insert (6) par l'intermédiaire de moyens d'entretoise (22).

4. Boulon (1) selon la revendication 3, dans lequel les moyens d'entretoise (22) comprennent une rondelle (16) disposée entre ledit anneau de rupture (14) et la tête d'insert (6).

5. Boulon (1) selon la revendication 3, dans lequel les moyens d'entretoise (22) comprennent un élément tubulaire (23) muni d'un épanouissement radial (24) apte à venir en appui contre la tête d'insert (6).

6. Boulon (1) selon la revendication 5, dans lequel ledit anneau de rupture (14) est constitué par la tête de vis (10).

7. Boulon (1) selon l'une quelconque des revendications 1 à 5, dans lequel ladite rupture s'opère dans l'anneau de rupture (14).

8. Boulon (1) selon l'une quelconque des revendications 3 à 5, dans lequel ladite rupture s'opère dans les moyens d'entretoise (22).

9. Boulon (1) selon l'une quelconque des revendications 1 à 8, dans lequel l'insert (2) comprend un moyen de blocage en rotation dudit insert (2), de préférence par une forme externe à section transversale non circulaire.

10. Boulon (1) selon l'une quelconque des revendications 1 à 9, dans lequel ladite vis (3) comporte une tête de vis (10) comprenant une embase (11) destinée à s'appuyer sur l'accessoire (4), de préférence une cavité (12) étant disposée sous ladite embase (11), en vue d'y loger au moins partiellement ledit anneau de rupture (14) et/ou lesdits moyens d'entretoise (22).

11. Boulon (1) selon l'une quelconque des revendications 1 à 10, dans lequel ladite tête d'insert (6), ledit anneau de rupture (14) et le cas échéant lesdits moyens d'entretoise (22) sont configurés de sorte qu'en position assemblée la tête de vis (10) s'appuie sur l'insert (2) par l'intermédiaire de l'anneau de rupture (14) et/ou des moyens d'entretoise (22), sans s'appuyer sur ledit accessoire (4), de sorte à constituer une fixation permettant audit accessoire (4) d'être mobile en rotation et/ou en translation par rapport à la paroi (5).

12. Boulon (1) selon l'une quelconque des revendications 1 à 11, dans lequel ladite vis (3) comporte une partie non filetée, comprise entre la tête de vis (10) et la partie filetée (13), qui ne coopère pas avec la partie taraudée (9) de l'insert (2), de sorte à conférer une élasticité nécessaire à la mise sous tension de la vis (3) audit boulon en situation de serrage, même lorsque les épaisseurs des accessoires et parois sont très faibles.

13. Boulon (1) selon l'une quelconque des revendications 1 à 12, dans lequel ledit insert (2) présente un affaiblissement du chambrage (8) de sorte à faciliter sa déformation lors du sertissage, de préférence cet affaiblissement étant matérialisé par des évidements.

14. Boulon (1) selon la revendication 7, dans lequel ladite vis (3) comporte une partie non filetée, comprise entre la tête de vis (10) et la partie filetée (13), qui ne coopère pas avec la partie taraudée (9) de l'insert (2), ladite partie non filetée étant munie d'un élargissement (17), conçu apte à permettre de figer la partie rompue d'anneau de rupture (14) par coulissement en force vers ledit élargissement (17) lors de la phase de vissage qui suit sa rupture.

15. Boulon (1) selon l'une quelconque des revendications 1 à 14, **caractérisé en ce que** l'insert (2) contient un lubrifiant (25), de préférence de la graisse.

16. Méthode de fixation d'un accessoire (4) sur une paroi (5) par le moyen d'un boulon (1) selon l'une quelconque des revendications 1 à 15, ledit accessoire (4) comportant un orifice d'accessoire (20) conçu pour laisser passer la tête d'insert (6), et ladite paroi (5) comportant un orifice de paroi (19) conçu pour laisser passer le fût (7) de l'insert (2), comportant les étapes suivantes :
a) disposition de l'accessoire (4) sur la paroi (5) de sorte à aligner les orifices d'accessoire (20) et de paroi (19),
b) introduction du boulon (1) dans les orifices ainsi alignés, dans le sens accessoire (4) vers paroi (5), jusqu'à application de la tête d'insert (6) sur la paroi (5),
c) mise en rotation de la vis (3), un filetage (13) de la vis (3) coopérant avec un taraudage (9) de l'insert (2), l'anneau de rupture (14) s'appuyant sur la tête d'insert (6), le cas échéant par l'intermédiaire des moyens d'entretoise (22), opérant ainsi une déformation du chambrage (8) sous la paroi (5) et réalisant ainsi le sertissage de l'insert (2) sur la paroi (5),
d) augmentation du couple jusqu'à obtenir la rupture libérant la vis (3) par rapport à la tête d'insert (6),
e) poursuite de la rotation de la vis (3) jusqu'à obtenir le serrage de l'accessoire (4) sur la paroi (5).

## Patentansprüche

1. Bolzen (1), umfassend eine Schraube (3) und ein Einsatzteil (2), das in eine Öffnung einer Wand (5) einsetzbar ist, wobei das besagten Einsatzteil (2) einen Einsatzkopf (6) und einen Schaft (7) mit einer Einsenkung (8) hat und der besagte Einsatzkopf (6) und die besagte Einsenkung (8) so ausgebildet sind, dass sie nach einer Verformung der Einsenkung (8) für eine Falzverbindung des besagtes Einsatzteils (2) an der Wand (5) sorgen, **dadurch gekennzeichnet, dass** die besagte Schraube (3) einen Bruchring (14) hat, der dazu dient, bei seiner direkten oder indirekten Abstützung an dem besagten Einsatzkopf (6) die besagte Schraube (3) relativ zu dem besagten Einsatzkopf (6) zu blockieren, wodurch sie durch ihre Drehung die Verformung der Einsenkung (8) und die besagte Falzverbindung erzeugt, und der ferner dazu dient, nach erzeugter Falzverbindung einen Bruch zum Freisetzen der Schraube (3) relativ zu dem besagte Einsatzkopf (6) herbeizuführen, wodurch ein Zusatzteil (4) auf der Wand (5) festgeklemmt wird.

2. Bolzen (1) nach Anspruch 1, bei dem sich der Bruchring (14) direkt an dem Einsatzkopf (6) abstützt.

3. Bolzen (1) nach Anspruch 1, bei dem sich der Bruchring (14) über Distanzmittel (22) indirekt an dem Einsatzkopf (6) abstützt.

4. Bolzen (1) nach Anspruch 3, bei dem die Distanzmittel (22) einen Zwischenring (16) aufweisen, der zwischen dem besagte Bruchring (14) und dem Einsatzkopf (6) angeordnet ist.

5. Bolzen (1) nach Anspruch 3, bei dem die Distanzmittel (22) ein rohrförmiges Element (23) mit einem radialen Flanschteil (24) aufweisen, das an dem Einsatzkopf (6) zur Anlage kommt.

6. Bolzen (1) nach Anspruch 5, bei dem der besagte Bruchring (14) durch den Schraubenkopf (10) gebildet wird.

7. Bolzen (1) nach einem der Ansprüche 1 bis 5, bei dem der besagte Bruch in dem Bruchring (14) erfolgt.

8. Bolzen (1) nach einem der Ansprüche 3 bis 5, bei dem der besagte Bruch in den Distanzmitteln (22) erfolgt.

9. Bolzen (1) nach einem der Ansprüche 1 bis 8, bei dem das Einsatzteil (2) ein Drehblockiermittel für das besagte Einsatzteil (2) hat, vorzugsweise durch eine Außenform mit nicht kreisförmigem Querschnitt.

10. Bolzen (1) nach einem der Ansprüche 1 bis 9, bei dem die besagte Schraube (3) einen Schraubenkopf (10) mit einer Sitzfläche (11) für die Abstützung auf dem Zusatzteil (4) hat, wobei in der besagten Sitzfläche (11) vorzugsweise eine Vertiefung (12) ausgebildet ist, in die der besagten Bruchring (14) und/oder die besagten Distanzmittel (22) wenigstens teilweise eingreifen.

11. Bolzen (1) nach einem der Ansprüche 1 bis 10, bei dem der besagte Einsatzkopf (6), der besagte Bruchring (14) und ggf. die besagten Distanzmittel (22) so ausgebildet sind, dass sich im zusammengebauten Zustand der Schraubenkopf (10) über den Bruchring (14) und/oder über die Distanzmittel (22) auf dem Einsatzteil (2) abstützt, ohne sich auf dem besagten Zusatzteil (4) abzustützen, wodurch eine Fixierung erfolgt, die dem besagten Zusatzteil (4) relativ zu der Wand (5) eine drehfreie und/oder translatorische Bewegung ermöglicht.

12. Bolzen (1) nach einem der Ansprüche 1 bis 11, bei dem die besagte Schraube (3) einen gewindefreien Abschnitt zwischen dem Schraubenkopf (10) und dem Gewindeabschnitt (13) hat, der nicht in Eingriff mit der Gewindebohrung (9) des Einsatzteils (2) ist, wodurch dem besagten Bolzen im Klemmzustand eine für das Einspannen der Schraube (3) notwendige Elastizität auch bei sehr geringen Stärken der Zusatzteile und der Wände verliehen wird.

13. Bolzen (1) nach einem der Ansprüche 1 bis 12, wobei das besagte Einsatzteil (2) eine Schwächung der Einsenkung (8) hat, die beim Klemmvorgang ihre Verformung begünstigt, wobei die Schwächung durch Aussparungen erzeugt werden.

14. Bolzen (1) nach Anspruch 7, bei dem die besagte Schraube (3) zwischen dem Schraubenkopf (10) und dem Gewindeabschnitt (13) einen gewindefreien Abschnitt hat, der nicht in Eingriff mit der Gewindebohrung (9) des Einsatzteils (2) ist und der eine Erweiterung (17) hat, die den gebrochenen Abschnitt des Bruchringes (14) bei der Zwangsverschiebung in Richtung auf die besagte Erweiterung (17) bei der auf den Bruch folgenden Verschraubung festhalten.

15. Bolzen (1) nach den Ansprüchen 1 bis 14, **dadurch gekennzeichnet, dass** das Einsatzteil (2) ein Schmiermittel (25) enthält, vorzugsweise Fett.

16. Verfahren zur Befestigung eines Zusatzteils (4) an einer Wand (5) mittels eines Bolzens (1) nach einem der Ansprüche 1 bis 15, wobei das besagte Zusatzteil (4) eine Zusatzteilöffnung (20) für den Durchgriff des Einsatzkopfes (6) und die besagte Wand (5) eine Wandöffnung (19) für den Durchgriff des Schaftes (7) des Zusatzteils (2) hat, umfassend die folgenden Schritte:
a) Ansetzen des Zusatzteils (4) an der Wand (5) derart, dass die Zusatzteilöffnung (20) und die Wandöffnung (19) miteinander fluchten,
b) Einsetzen des Bolzens (1) in die so fluchtenden Öffnungen in Richtung des Zusatzteils (4) zur Wand (5), bis der Einsatzkopf (6) an der Wand (5) anliegt,
c) Drehen der Schraube (3), so dass das Gewinde (13) der Schraube (3) in die Gewindebohrung (9) des Einsatzteils (2) eingreift, wobei der Bruchring (14) sich ggf. über die Distanzmittel (22) an dem Einsatzkopf (6) abstützt, wodurch eine Verformung der Einsenkung (8) unter der Wand (5) erzeugt und dadurch das Einsatzteil (2) an der Wand (5) eingespannt wird,
d) Erhöhung des Drehmomentes bis zur Erzeugung des Bruches, bis die Schraube (3) relativ zu dem Einsatzkopf (6) befreit wird,
e) Fortsetzung der Drehung der Schraube (3) bis zum Festklemmen des Zusatzteils (4) an der Wand (5).

## Claims

1. Bolt (1) comprising a screw (3) and an insert (2) which can be inserted in the opening in a wall (5), said insert (2) comprising an insert head (6) and a shaft (7) comprising a recess (8), said insert head (6) and said recess (8) being configured such as, after deformation of the recess (8), to ensure the crimping of said insert (2) on said wall (5), **characterized in that** said screw (3) comprises a break ring (14), which, by being supported on said insert head (6) directly or indirectly, is designed to immobilize said screw (3) relative to said insert head (6), in order to create the deformation of the recess (8) by rotation of the screw and obtain said crimping, and, once the crimping has been carried out, it is designed to give rise to breakage, such as to release the screw (3) from said insert head (6), thus permitting the tightening of an accessory (4) on the wall (5).

2. Bolt (1) as claimed in claim 1, wherein the break ring (14) is supported directly against the insert head (6).

3. Bolt (1) as claimed in claim 1, wherein the break ring (14) is supported indirectly against the insert head (6) by means of bracing means (22).

4. Bolt (1) as claimed in claim 3, wherein the bracing means (22) comprise a washer (16) which is provided between said break ring (14) and the insert head (6).

5. Bolt (1) as claimed in claim 3, wherein the bracing means (22) comprise a tubular element (23) provided with a radial spreaded part (24) which can be supported against the insert head (6).

6. Bolt (1) as claimed in claim 5, wherein said break ring (14) is constituted by the screw head (10).

7. Bolt (1) as claimed in any one of claims 1 to 5, wherein said breakage takes place in the break ring (14).

8. Bolt (1) as claimed in any one of claims 3 to 5, wherein said breakage takes place in the bracing means (22).

9. Bolt (1) as claimed in any one of claims 1 to 8, wherein the insert (2) comprises a means for blocking said insert (2) in rotation, preferably by an external form with a non-circular transverse cross-section.

10. Bolt (1) as claimed in any one of claims 1 to 9, wherein said screw (3) comprises a screw head (10) comprising a base (11) which is designed to be supported on the accessory (4), a cavity (12) preferably being provided below said base (11) in order to accommodate in it at least partially said break ring (14) and/or said bracing means (22).

11. Bolt (1) as claimed in any one of claims 1 to 10, wherein said insert head (6), said break ring (14) and, if applicable, said bracing means (22) are configured such that, in the assembled position, the screw head (10) is supported on the insert (2) by means of the break ring (14) and/or bracing means (22), without being supported on said accessory (4), such as to constitute an attachment which allows said accessory (4) to be mobile in rotation and/or translation relative to the wall (5).

12. Bolt (1) as claimed in any one of claims 1 to 11, wherein said screw (3) comprises a non-threaded part, contained between the screw head (10) and the threaded part (13), which does not cooperate with the tapped part (9) of the insert (2), such as to provide resilience necessary to create the tension of the screw (3) on said bolt in the tightened situation, even when the thicknesses of the accessories and walls are very slight.

13. Bolt (1) as claimed in any one of claims 1 to 12, wherein said insert (2) has weakening of the recess (8), such as to facilitate its deformation during the crimping, this weakening preferably taking the form of undercuts.

14. Bolt (1) as claimed in claim 7, wherein said screw (3) comprises a non-threaded part, contained between the screw head (10) and the threaded part (13), which does not cooperate with the tapped part (9) of the insert (2), said non-threaded part being provided with a widened part (17) which is designed to make it possible to fix the broken part of the break ring (14) by forcing it to slide towards said widened part (17) during the screwing phase which follows its breakage.

15. Bolt (1) as claimed in any one of claims 1 to 14, **characterized in that** the insert (2) contains a lubricant (25), preferably grease.

16. Method for securing an accessory (4) on a wall (5) by means of a bolt (1) according to any one of claims 1 to 15, said accessory (4) comprising an accessory opening (20) designed to allow the insert head (6) to pass through, and said wall (5) comprising a wall opening (19) designed to allow the shaft (7) of the insert (2) to pass through, comprising the following steps:
a) arrangement of the accessory (4) on the wall (5), such as to align the accessory (20) and wall (19) openings,
b) introduction of the bolt (1) into the openings thus aligned, in the direction from the accessory (4) towards the wall (5), until the insert head (6) is applied on the wall (5),
c) rotation of the screw (3), with a thread (13) of the screw (3) cooperating with a tapping (9) of the insert (2), the break ring (14) being supported on the insert head (6), if applicable by means of bracing means (22), thus creating deformation of the recess (8) below the wall (5), and consequently carrying out the crimping of the insert (2) on the wall (5),
d) increasing the torque until the breakage is obtained, thus releasing the screw (3) from the insert head (6),
e) continuation of rotation of the screw (3) until the accessory (4) is tightened on the wall (5).
